# FASCICULE DE BREVET EUROPEEN

(11) **EP 3 987 369 B1**
(45) Date de publication et mention de la délivrance du brevet: **06.08.2025**
(21) Numéro de dépôt: 20733451.7
(22) Date de dépôt: 22.06.2020
(51) Int. Cl.: G05B 19/402, G05B 19/4093, B23Q 39/02, B64F 5/10

(54) **PROCEDE D'USINAGE D'UN PANNEAU METALLIQUE PAR UN SYSTEME D'USINAGE MECANIQUE AUTOMATISE**
VERFAHREN ZUR BEARBEITUNG EINES METALLBLECHS UNTER VERWENDUNG EINES AUTOMATISIERTEN MECHANISCHEN BEARBEITUNGSSYSTEMS
METHOD FOR MACHINING A METAL PANEL USING AN AUTOMATED MECHANICAL MACHINING SYSTEM

(30) Priorité: 24.06.2019 FR 1906805
(43) Date de publication de la demande: 27.04.2022
(73) Titulaire: Airbus Atlantic, 17300 Rochefort (FR)
(72) Inventeur: GAULIN, Nicolas, 85300 Le Perrier (FR); AUBERT, Yoann, 44250 Saint Brevin Les Pins (FR); GERARD, Giovanni, 44160 Saint Anne sur Brivet (FR); RIVALLAND, David, 44160 Pontchateau (FR); LE MOAL, Gwénolé, 44400 Rezé (FR)
(74) Mandataire: Argyma
(86) Numéro de dépôt international: PCT/EP2020/067375
(87) Numéro de publication internationale: WO 2020/260209

(56) Documents cités:
- CN-A- 107 344 251
- FR-A1- 2 861 325
- US-A1- 2006 039 765

## Description

### DOMAINE TECHNIQUE DE L'INVENTION

La présente invention concerne le domaine de l'usinage de panneaux métalliques et vise plus particulièrement un procédé d'usinage d'un panneau métallique incurvé. Bien que la présente invention puisse être utilisée dans de nombreux domaines, elle trouve une application particulière dans l'aéronautique où l'usinage de tels panneaux métalliques permet de réaliser les pièces de structure d'un aéronef comme une partie de fuselage.

De manière connue, le critère de masse est prépondérant dans la réalisation des pièces de structure d'un aéronef, afin de réduire leur consommation énergétique et la quantité de carburant embarquée à bord. Pour être légère et résistante, une pièce de structure comprend ainsi une alternance de zones de faible épaisseur et de zones de forte épaisseur.

Pour former une telle pièce de structure, on connaît dans l'art antérieur un procédé d'usinage chimique, par électroérosion, où la portion de panneau d'épaisseur constante devant être usinée est trempée dans des bains de solutions électrolytiques. Un tel procédé est long à mettre en oeuvre, nécessite des produits chimiques et ne permet pas d'obtenir un usinage précis. Il n'est donc pas adapté à une production en série, générique et répétable. L'utilisation de produits chimiques est contraignante étant donné qu'elle nécessite des habilitations et autorisations spécifiques. En outre, l'utilisation de produits chimiques est polluante.

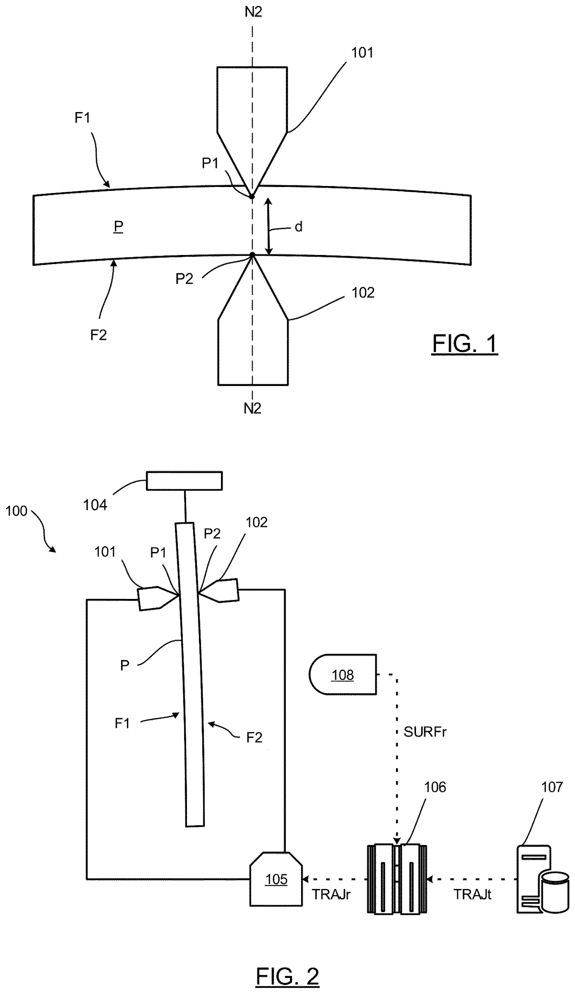

On connaît également dans l'art antérieur par la demande de brevet FR2861325A1 un système d'usinage automatisé mécanique pour usiner un panneau métallique. En référence aux figures 1 et 2, un panneau métallique P comprend une première face F1 et une deuxième face F2 qui est opposée à la première face F2. Le système d'usinage mécanique 100 comprend un outil d'usinage 101 configuré pour arracher ou pour enlever de la matière de la première face F1, appelée face d'usinage F1, et un outil de maintien 102, servant de contre-appui, configuré pour appuyer sur la deuxième face F2, appelée face de maintien F2. Pour permettre un usinage, l'outil d'usinage 101 et l'outil de maintien 102 sont toujours alignés selon un même axe d'usinage et de maintien N2 qui est normal à la deuxième face F2 comme illustré à la figure 1. Lors de l'usinage de la première face F1, l'outil d'usinage 101 et l'outil de maintien 102 sont déplacés de façon coordonnée, en miroir, pour réaliser l'usinage souhaité.

Comme illustré à la figure 1, l'outil d'usinage 101 comporte une extrémité d'usinage adaptée pour venir en contact avec la première face F1 du panneau P selon un point d'usinage P1. De manière analogue, l'outil de maintien 102 comporte une extrémité de maintien adaptée pour venir en contact avec la deuxième face F2 du panneau P selon un point de maintien P2. Lors de l'usinage, le point d'usinage P1 et le point de maintien P2 appartiennent à la normale N2 de la deuxième face F2 de manière à ce que l'outil de maintien 2 s'oppose, au point de maintien P2, à la force d'appui de l'outil d'usinage 1 au point d'usinage P1. Pendant le déplacement de l'outil d'usinage 101 et de l'outil de maintien 102, le point d'usinage P1 et le point de maintien P2 sont écartés d'une distance d qui est égale à l'épaisseur souhaitée du panneau P.

En pratique, en référence à la figure 2, le système d'usinage 100 comporte un module de support 104 du panneau P en position verticale afin que les outils d'usinage 1 et de maintien 2 puissent accéder aux deux faces F1, F2 du panneau P. Le système d'usinage 100 comprend un module de commande 105 configuré pour commander la position et l'orientation de l'outil d'usinage 101 et de l'outil de maintien 102. Comme illustré à la figure 2, le système d'usinage mécanique 100 comprend un module d'adaptation 106 configuré pour fournir des trajectoires d'usinage réelles TRAJr au module de commande 105 à partir, d'une part, de trajectoires d'usinage théoriques TRAJt, fournies par un module de conception 107 et, d'autre part, d'une mesure de la surface réelle SURFr de la face de maintien F2 fournie par un module de mesure 108.

Les trajectoires d'usinage théoriques TRAJt sont définies pour une surface théorique SURFt de la face de maintien F2 à partir du module de conception 107. De manière avantageuse, le module d'adaptation 106 permet d'adapter les trajectoires d'usinage théoriques TRAJt à la surface réelle SURFr de la face de maintien F2. Un tel module d'adaptation 106 met en oeuvre des étapes de transformations géométriques, en particulier des fonctions de morphing, afin de déterminer une correspondance entre la surface théorique SURFt et la surface réelle SURFr et en déduire une transformation des trajectoires d'usinage théoriques TRAJt en trajectoires d'usinage réelles TRAJr. En résumé, le module d'adaptation 106 met en oeuvre une fonction d'adaptation F des trajectoires d'usinage théoriques TRAJt en trajectoires d'usinage réelles TRAJr en tenant compte de la surface réelle SURFr. Une telle fonction d'adaptation F n'est pas définie de manière analytique mais obtenue par étapes successives d'optimisation mathématique en fonction de la mesure de la surface réelle SURFr. Aussi, en pratique, cette fonction d'adaptation F n'est pas accessible et ne peut pas être adaptée ou modifiée aisément.

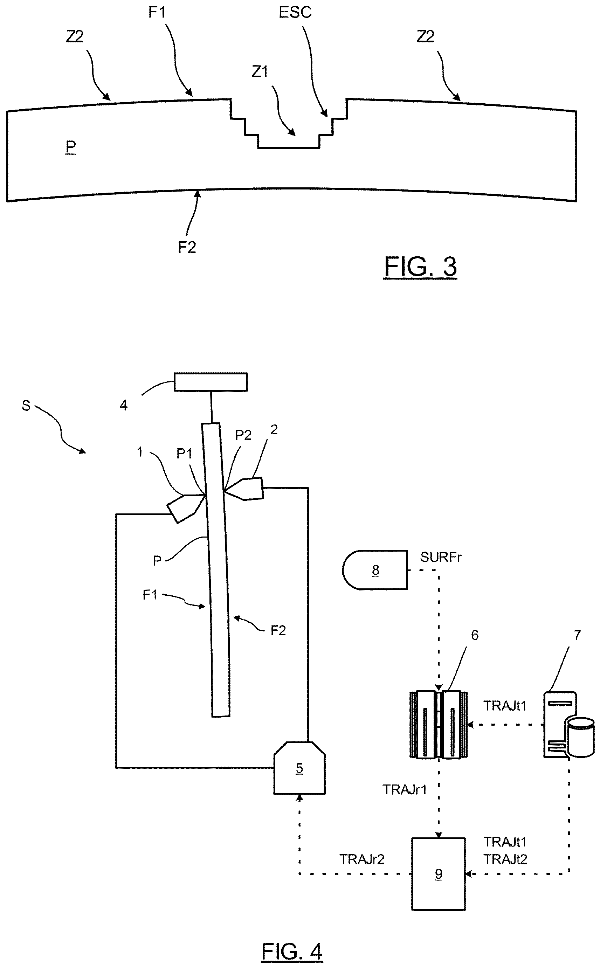

En référence à la figure 3, lors de l'usinage d'une zone de faible épaisseur Z1 adjacente à une zone de forte épaisseur Z2 sur la première face F1 du panneau P, il est connu de réaliser plusieurs passages successifs de l'outil d'usinage 101 de manière à former des escaliers ESC et ainsi simuler une pente. Etant donné que l'outil d'usinage 101 et l'outil de maintien 102 sont alignés selon un même axe normal N2 et sont déplacés en miroir, la formation de tels escaliers ESC ne peut pas être évitée. En pratique, le module d'adaptation 106 n'est configuré que pour transformer des trajectoires d'usinage théorique simples TRAJt, en particulier, en escaliers. Le module d'adaptation 106 n'est pas configuré pour transformer des trajectoires d'usinage théorique en pente TRAJt.

De tels escaliers ESC sont susceptibles de faire apparaître des failles au niveau des discontinuités des surfaces et impose de procéder à une étape de rectification manuelle qui augmente le temps d'usinage ainsi que le coût.

Afin d'éliminer ces inconvénients, la solution est d'utiliser un outil d'usinage de très faible diamètre afin de former des paliers de faibles dimensions sensiblement continus. Néanmoins, une telle solution nécessite de très nombreux passages et ne peut pas être retenue.

Il existe donc un besoin pour un procédé d'usinage de panneaux métalliques permettant de réaliser des pentes continues de manière automatisée.

Le document CN107344251A concerne un système d'usinage mécanique en miroir traditionnel dont chaque outil est orientable. US2006/039765A1 et FR2861325 présentent d'autres procédés d'usinage selon l'art antérieur.

### PRESENTATION DE L'INVENTION

A cet effet, l'invention concerne un système d'usinage mécanique automatisé selon la revendication 1.

De manière avantageuse, grâce à l'invention, on tire avantage du module d'adaptation pour déterminer les trajectoires d'usinage réelles en pente TRAJr2 sans modifier le module d'adaptation qui est performant mais inadapté pour recevoir des trajectoires d'usinage en pente. Le module de gestion de pente possède avantageusement une structure simple par comparaison au module d'adaptation qui est complexe.

De manière préférée, le module de gestion de pente est configuré pour déterminer des trajectoires d'usinage réelles en pente TRAJr2 sans utilisation directe de la mesure de la surface réelle SURFr de la deuxième face. En effet, la mesure de la surface réelle SURFr de la deuxième face est uniquement prise en compte de manière indirecte dans les trajectoires d'usinage réelles simples TRAJr1. Une telle approche permet de réduire le temps de calcul et d'accélérer l'étape d'usinage.

Selon l'invention, le module de gestion de pente comporte :
- un sous-module de détermination d'une fonction d'adaptation élémentaire à partir des trajectoires d'usinage théoriques simples prédéterminées TRAJt1 et des trajectoires d'usinage réelles simples TRAJr1 ;
- un sous-module de transformation de trajectoires d'usinage théoriques en pente prédéterminées TRAJt2 par la fonction d'adaptation élémentaire afin d'obtenir les trajectoires d'usinage réelles en pente TRAJr2.

La fonction d'adaptation élémentaire est déterminée de manière rapide avec un coût calculatoire réduit par comparaison au module d'adaptation.

De manière préférée, le sous-module de détermination est configuré pour déterminer la primitive de la fonction d'adaptation élémentaire à partir des trajectoires d'usinage théoriques simples prédéterminées TRAJt1 et des trajectoires d'usinage réelles simples TRAJr1.

De préférence, le module de commande est configuré pour orienter l'outil de maintien selon la normale à la deuxième face audit point de maintien et configuré pour orienter l'outil d'usinage selon un axe d'usinage qui est écarté de la normale à la deuxième face d'un angle d'inclinaison qui est supérieur à 3°, de préférence, supérieur à 5°. De manière avantageuse, les trajectoires d'usinage réelles en pente TRAJr2 permettent de modifier l'orientation de l'outil d'usinage qui est alors désaligné de l'outil de maintien tout en restant en opposition.

Selon un aspect de l'invention, l'angle d'inclinaison est supérieur à 3°, de préférence, supérieur à 5°. De préférence, le module de commande est configuré pour orienter l'outil d'usinage selon un axe d'usinage qui est écarté de la normale à la deuxième face d'un angle d'inclinaison qui est compris entre 0° et 45°.

L'invention concerne un procédé d'usinage d'un panneau métallique par un système d'usinage mécanique automatisé tel que présenté précédemment, procédé comprenant :
- une étape de mesure de la surface réelle SURFr de la deuxième face
- une étape de détermination de trajectoires d'usinage réelles simples TRAJr1 à partir, d'une part, de trajectoires d'usinage théoriques simplesTRAJt1 prédéterminées, et, d'autre part, de la mesure de la surface réelle SURFr de la deuxième face
- une étape de détermination de trajectoires d'usinage réelles en pente TRAJr2 à partir de trajectoires d'usinage théoriques en pente prédéterminées TRAJt2, des trajectoires d'usinage théoriques simples prédéterminées TRAJt1 et des trajectoires d'usinage réelles simples TRAJr1
- une étape de commande de l'outil d'usinage et de l'outil de maintien de manière coordonnée, à partir de trajectoires d'usinage réelles en pente TRAJr2, le point d'usinage étant aligné avec le point de maintien selon la normale à la deuxième face audit point de maintien.

De manière préférée, au cours de l'étape de commande de l'outil d'usinage et l'outil de maintien de manière coordonnée, l'outil de maintien est orienté selon la normale à la deuxième face audit point de maintien et l'outil d'usinage est orienté selon un axe d'usinage qui est écarté de la normale à la deuxième face d'un angle d'inclinaison qui est supérieur à 3°.

L'invention concerne également un procédé d'usinage d'un panneau métallique par un système d'usinage mécanique automatisé comprenant au moins un outil d'usinage configuré pour venir en contact avec la première face du panneau selon un point d'usinage,
- au moins un outil de maintien configuré pour venir en contact avec la deuxième face du panneau selon un point de maintien,
- et un module de commande configuré pour commander l'outil d'usinage et l'outil de maintien de manière coordonnée, à partir de trajectoires d'usinage, de sorte à ce que le point d'usinage soit aligné avec le point de maintien selon la normale à la deuxième face audit point de maintien, le procédé comporte une étape de commande de l'outil d'usinage et l'outil de maintien de manière coordonnée, au cours de laquelle, le point d'usinage est aligné avec le point de maintien selon la normale à la deuxième face audit point de maintien.

L'invention est remarquable en ce que, au cours de l'étape de commande de l'outil d'usinage et l'outil de maintien, le module de commande oriente l'outil de maintien selon la normale à la deuxième face audit point de maintien et oriente l'outil d'usinage selon un axe d'usinage qui est écarté de la normale à la deuxième face d'un angle d'inclinaison qui est supérieur à 3°.

De manière préférée, l'angle d'inclinaison varie entre 0° et 45° et est augmenté progressivement, en fonction des configurations d'usinage, à partir de 0°.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
- La figure 1 est une représentation schématique d'une étape d'usinage d'un panneau métallique selon l'art antérieur,
- La figure 2 est une représentation schématique d'un système d'usinage mécanique selon l'art antérieur,
- La figure 3 est une représentation schématique d'un usinage en escaliers d'un panneau métallique selon l'art antérieur,
- La figure 4 est une représentation schématique d'un système d'usinage mécanique selon l'invention,
- La figure 5 est une représentation schématique d'étapes de détermination de trajectoires d'usinage réelles en pente selon l'invention,
- La figure 6 est une représentation schématique d'une étape d'usinage en escaliers d'un panneau métallique selon l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

En référence à la figure 4, il est représenté un système d'usinage S selon l'invention pour usiner un panneau métallique P.

Dans cet exemple, le panneau P est métallique et, de préférence, réalisé en aluminium, en aluminium-lithium, en alliage (toutes nuances, toutes séries), ou analogue. L'invention s'applique plus particulièrement à un panneau P de grandes dimensions, c'est-à-dire, ayant au moins une de ses dimensions supérieure à 1,5 mètres.

De manière préférée, le panneau P est incurvé suite à une étape de formage réalisée préalablement, en particulier, par roulage ou étirage transversal ou longitudinal. Sa forme incurvée, ou bombée, empêche un usinage classique en positionnant le panneau 1 sur une enclume de forme complémentaire. Comme cela sera présenté par la suite, le panneau métallique P est usiné en position verticale par utilisation d'un contre-appui mobile qui est déplacé de manière coordonnée.

De préférence, le panneau P possède une épaisseur constante, en particulier, comprise entre 2mm à 15mm. Un tel panneau P peut également comprendre des portions épaissies pour le renforcer. Lors de l'usinage, il est formé des ouvertures traversantes dans le panneau 1, des concavités, appelées poches, ainsi que des zones de forte épaisseur et des zones de faible épaisseur. L'usinage permet de former une pièce structurelle de masse optimisée.

En référence à la figure 3, un panneau métallique P comprend une première face F1, appelée face d'usinage F1, et une deuxième face F2, appelée face de maintien F2, qui est opposée à la première face F1. Il va de soi que le panneau P peut être usiné selon ses deux faces F1, F2. Par souci de clarté et de concision, il est uniquement présenté l'usinage de la première face F1.

Toujours en référence à la figure 3, de manière analogue à précédemment, le système d'usinage mécanique S comprend un outil d'usinage 1 configuré pour arracher ou pour enlever de la matière de la première face F1 et un outil de maintien 2, servant de contre-appui, configuré pour appuyer sur la deuxième face F2.

Comme illustré à la figure 3, l'outil d'usinage 1 comporte une extrémité d'usinage adaptée pour venir en contact avec la première face F1 du panneau P selon un point d'usinage P1. De manière analogue, l'outil de maintien 2 comporte une extrémité de maintien adaptée pour venir en contact avec la deuxième face F2 du panneau P selon un point de maintien P2. Lors de l'usinage, le point d'usinage P1 et le point de maintien P2 appartiennent à la normale N2 de la deuxième face F2 de manière à ce que l'outil de maintien 2 s'oppose, au point de maintien P2, à la force d'appui de l'outil d'usinage 1 au point d'usinage P1. Pendant le déplacement de l'outil d'usinage 1 et de l'outil de maintien 2, le point d'usinage P1 et le point de maintien P2 sont écartés d'une distance d qui est égale à l'épaisseur souhaitée du panneau P.

Dans cet exemple, chaque outil 1, 2 comporte un bras automatisé mobile selon six degrés de liberté (quatre translations et deux rotations) mais il va de soi que les degrés de liberté pourraient être différents. L'outil d'usinage 1 comporte une extrémité d'usinage qui pourrait être de différentes natures. De même, l'outil de maintien 1 comporte une extrémité de maintien se présentant sous la forme d'une sphère ou d'un cylindre mais il va de soi qu'elle pourrait être de forme différente.

Le système d'usinage 1 comporte un module de support 4 du panneau P en position verticale afin que les outils d'usinage 1 et de maintien 2 puissent accéder aux deux faces F1, F2 du panneau P. Le module de support 4 se présente, de manière préférée, sous la forme d'un cadre vertical dans lequel est monté le panneau P. De préférence encore, le système d'usinage S comporte des moyens de refroidissement et d'évacuation des copeaux d'usinage (non représentés), de préférence, des moyens d'injection d'un flux d'eau.

Le système d'usinage S comprend en outre un module de commande 5 configuré pour commander la position et l'orientation de l'outil d'usinage 1 et de l'outil de maintien 2. Le module de commande 5 est configuré pour déplacer, orienter et activer l'outil d'usinage 1 et l'outil de maintien 2 à partir de trajectoires d'usinage réelles TRAJr. Le module de commande 5 se présente de manière préférée sous la forme d'une armoire de commande numérique associée à des automates.

De tels composants sont connus de la demande de brevet FR2861325A1 et ils ne seront pas présentés de nouveau par souci de clarté et de concision.

Comme illustré à la figure 3, le système d'usinage mécanique S comprend également un module d'adaptation 6 configuré pour fournir des trajectoires d'usinage simples réelles TRAJr1 au module de commande 5 à partir, d'une part, de trajectoires d'usinage simples théoriques prédéterminées TRAJt1, fournies par un module de conception 7 et, d'autre part, d'une mesure de la surface réelle SURFr de la deuxième face F2 fournie par un module de mesure 8.

Le module d'adaptation 6 se présente sous la forme d'un ordinateur et d'une succession d'applications permettant d'adapter les trajectoires d'usinage théoriques prédéterminées TRAJt1 à la surface réelle SURFr de la deuxième face F2. Comme présenté précédemment, un tel module d'adaptation 6 ne peut recevoir que des trajectoires d'usinage théoriques simples TRAJt1, en particulier en escaliers, et ne peut pas recevoir des trajectoires d'usinage théoriques en pente TRAJt2.

Un tel module d'adaptation 6 met en oeuvre des étapes de transformations géométriques, en particulier des fonctions de morphing, afin de déterminer une correspondance entre la surface théorique SURFt et la surface réelle SURFr et en déduire une transformation des trajectoires d'usinage théoriques simples TRAJt1 en trajectoires d'usinage réelles simples TRAJr1. En résumé, le module d'adaptation 6 met en oeuvre une fonction d'adaptation F des trajectoires d'usinage théoriques simples TRAJt1 en trajectoires d'usinage réelles simples TRAJr1. Une telle fonction d'adaptation F n'est pas définie de manière analytique mais obtenue par étapes successives d'optimisation en fonction de la mesure de la surface réelle SURFr. Comme présenté précédemment, cette fonction d'adaptation F n'est pas accessible et ne peut pas être adaptée directement.

Le module de conception 7 se présente de manière préférée sous la forme d'un ordinateur et permet de définir des trajectoires d'usinage théoriques TRAJt1, TRAJt2 par utilisation d'une succession d'applications de conception assistée par ordinateur pour une pièce théorique dont la surface théorique SURFt de la deuxième face F2 est connue.

En pratique, les dimensions du panneau usiné P sont déterminées par le module de conception 7. Dans l'art antérieur, les dimensions étaient déterminées afin de ne pas comprendre de pente oblique étant donné qu'elles ne pouvaient pas être interprétées par le module d'adaptation 6. Dans la présente invention, les dimensions du panneau usiné P sont déterminées de manière libre avec moins de contraintes et il est possible de prévoir des pentes obliques. Par pente oblique, on entend une variation continue de l'épaisseur.

Une fois les dimensions du panneau usiné P déterminées, le module de conception 7 permet de fournir des trajectoires d'usinage théoriques en pente prédéterminées TRAJt2 correspondant aux dimensions du panneau usiné P déterminées mais également des trajectoires d'usinage théoriques simples prédéterminées TRAJt1 correspondant aux dimensions du panneau usiné P déterminées. Autrement dit, deux types de trajectoires TRAJt1, TRAJt2 sont fournies à partir d'une même définition du panneau usiné P.

Le module de mesure 8 est configuré pour mesurer la géométrie de la deuxième face F2 et se présente, par exemple, sous la forme d'un scanner tridimensionnel, de manière à assurer un positionnement précis des outils d'usinage 1 et de maintien 2.

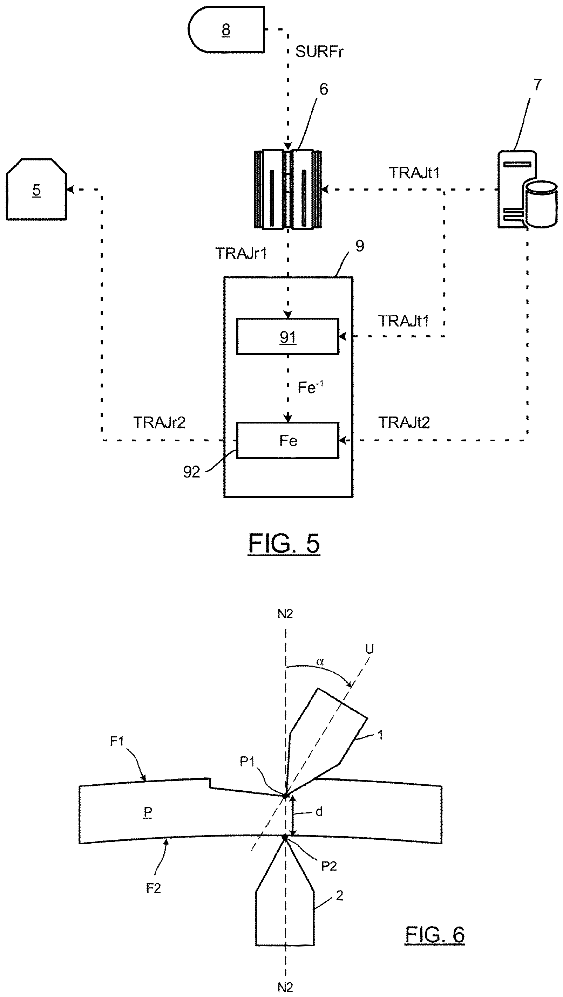

En référence à la figure 5, selon l'invention, le système d'usinage S comporte un module de gestion de pente 9 qui se présente, de préférence, sous la forme d'un calculateur. Le module de gestion de pente 9 est configuré pour déterminer des trajectoires d'usinage réelles en pente TRAJr2 à partir de trajectoires d'usinage théoriques en pente prédéterminées TRAJt2, des trajectoires d'usinage théoriques simples prédéterminées TRAJt1 et des trajectoires d'usinage réelles simples TRAJr1. Cela permet avantageusement de ne plus rendre coaxial l'appui et l'outil d'usinage.

De manière avantageuse, le module de gestion de pente 9 permet de fournir des trajectoires d'usinage réelles en pente TRAJt2 au module de commande 5 afin de réaliser un usinage optimal comprenant des pentes obliques améliorant la résistance mécanique du panneau entre les zones de fortes épaisseurs et les zones de faibles épaisseurs. Contrairement à l'art antérieur, c'est le module de gestion de pente 9 qui est utilisé pour fournir les trajectoires d'usinage au module de commande 5 et non le module d'adaptation 6.

De manière préférée, le module de gestion de pente 9 est configuré pour déterminer des trajectoires d'usinage réelles en pente TRAJr2 sans utilisation de la mesure de la surface réelle SURFr de la deuxième face F2. Ainsi, le module de gestion de pente 9 n'est pas un module d'adaptation 6 amélioré mais possède une structure plus simple en s'appuyant sur la robustesse et la pertinence du module d'adaptation 6 qui a été développé et perfectionné au cours du temps.

Dans cette forme de réalisation, le module de gestion de pente 9 comporte :
- un sous-module de détermination 91 d'une fonction d'adaptation élémentaire Fe à partir des trajectoires d'usinage théoriques simples prédéterminées TRAJt1 et des trajectoires d'usinage réelles simples TRAJr1 ; et
- un sous-module de transformation 92 de trajectoires d'usinage théoriques en pente prédéterminées TRAJt2 par la fonction d'adaptation élémentaire Fe afin d'obtenir les trajectoires d'usinage réelles en pente TRAJr2.

La fonction d'adaptation élémentaire Fe se distingue de la fonction d'adaptation mise en oeuvre par le module d'adaptation 6 en ce qu'elle est valable uniquement pour la surface réelle SURFr de la deuxième face F2 du panneau P. De manière préférée, le sous-module de détermination 91 est configuré pour déterminer la primitive Fe⁻¹ de la fonction d'adaptation élémentaire Fe à partir des trajectoires d'usinage théoriques simples prédéterminées TRAJt1 et des trajectoires d'usinage réelles simples TRAJr1. Autrement dit, la fonction d'adaptation élémentaire Fe est déduite a posteriori suite au traitement du module d'adaptation 6 de manière à prendre en compte les transformations géométriques déterminées pour des trajectoire d'usinage réelles simples TRAJr1.

De manière avantageuse, le sous-module de transformation 92 applique les transformations géométriques, calculées pour des trajectoires simples, aux trajectoires en pente. Les trajectoires d'usinage réelles en pente TRAJr2 permettent de commander de manière coordonnée les outils 1, 2 tout en orientant l'outil d'usinage 1 selon un axe d'usinage U qui est écarté de la normale N2 à la deuxième face F2 d'un angle d'inclinaison α qui est supérieur à 3°, de préférence à 5° comme illustré à la figure 6. De manière préférée, l'angle d'inclinaison α est compris entre 0° et 45°. L'angle d'inclinaison varie progressivement, en fonction des configurations d'usinage, à partir de 0° jusqu'à la valeur cible. Il a été illustré une inclinaison selon un unique plan mais il va de soi que l'inclinaison pourrait être réalisée selon 3 plans.

Un exemple de mise en oeuvre d'un procédé d'usinage selon l'invention va être présenté en référence à la figure 4.

Le procédé comprend une étape de mesure de la surface réelle SURFr de la deuxième face F2 par le module de mesure 8.

Ensuite, le procédé comporte une étape de détermination, par le module d'adaptation 6, de trajectoires d'usinage réelles simples TRAJr1 à partir, d'une part, de trajectoires d'usinage théoriques simples prédéterminées TRAJt1, et, d'autre part, de la mesure de la surface réelle SURFr de la deuxième face F2. De manière connue, les trajectoires d'usinage réelles simples TRAJr1 sont déterminées à partir d'une mesure de la surface théorique SURFt qui est connue du module d'adaptation 6. Contrairement à l'art antérieur qui transmettait les trajectoires d'usinage réelles simples TRAJr1 au module de commande 5, celles-ci sont uniquement utilisées pour déterminer les trajectoires d'usinage réelles en pente TRAJr2.

Dans cet exemple, le procédé comporte une étape de détermination de trajectoires d'usinage réelles en pente TRAJr2 à partir de trajectoires d'usinage théoriques en pente prédéterminées TRAJt2, des trajectoires d'usinage théoriques simples prédéterminées TRAJt1 et des trajectoires d'usinage réelles simples TRAJr1 par le module de gestion de pente 9.

De manière préférée, le procédé comporte une étape de détermination d'une fonction d'adaptation élémentaire Fe à partir des trajectoires d'usinage théoriques simples prédéterminées TRAJt1 et des trajectoires d'usinage réelles simples TRAJr1 par le sous-module de détermination 91. De préférence, le sous-module de détermination 91 est configuré pour déterminer la primitive Fe⁻¹ de la fonction d'adaptation élémentaire Fe à partir des trajectoires d'usinage théoriques simples prédéterminées TRAJt1 et des trajectoires d'usinage réelles simples TRAJr1. Dans cet exemple, la primitive Fe⁻¹ se présente sous la forme d'une matrice dont les coefficients sont déterminés par optimisation linéaire ou non linéaire. La fonction élémentaire Fe est obtenue par inversion de la fonction primitive Fe⁻¹.

Le procédé comporte une étape de détermination des trajectoires d'usinage réelles en pente TRAJr2 par la fonction d'adaptation élémentaire Fe du sous-module de transformation 92 à partir des trajectoires d'usinage théoriques en pente prédéterminées TRAJt2.

Le procédé comporte une étape de commande de l'outil d'usinage 1 et de l'outil de maintien 2 de manière coordonnée par le module de commande 5, à partir de trajectoires d'usinage réelles en pente TRAJr2. Au cours de l'étape de commande, le point d'usinage P1 est aligné avec le point de maintien P2 selon la normale N2 à la deuxième face F2 audit point de maintien P2 afin de former un contre-appui optimal.

Au cours de l'étape de commande, la position du point de maintien P2 est déplacée de manière précise sur la deuxième face F2. La position du point d'usinage P1 et l'orientation de l'outil d'usinage 1 sont définies par les trajectoires d'usinage réelles en pente TRAJr2 afin de réaliser un usinage optimal. En particulier, pour chaque point de maintien P2, il est défini un écartement d et une orientation de l'axe d'usinage U.

Lorsqu'une zone en pente doit être réalisée, le module de commande 5 oriente l'outil de maintien 2 selon la normale N2 à la deuxième face F2 audit point de maintien P2 et oriente l'outil d'usinage 1 selon un axe d'usinage U qui est écarté de la normale N2 à la deuxième face F2 d'un angle d'inclinaison α. Selon un aspect de l'invention, l'angle d'inclinaison α varie au cours de l'étape de commande afin de former des pentes obliques de formes adaptées.

En résumé, le procédé selon l'invention permet de réaliser un usinage suivant une pente oblique quelconque grâce à un outil d'usinage 1 pouvant être désaligné par rapport à l'outil de maintien 2. L'usinage réalisé est de plus rapide et précis, ne nécessite pas de finitions manuelles et permet de fournir une pièce finale légère avec une grande résistance mécanique.

## Revendications

1. Système d'usinage mécanique automatisé (S) d'un panneau métallique (P) comprenant une première face (F1) et une deuxième face (F2), qui est opposée à la première face (F1), le système d'usinage mécanique automatisé (S) comprenant :
- au moins un outil d'usinage (1) configuré pour venir en contact avec la première face (F1) du panneau (P) selon un point d'usinage (P1),
- au moins un outil de maintien (2) configuré pour venir en contact avec la deuxième face (F2) du panneau (P) selon un point de maintien (P2),
- un module de commande (5) configuré pour commander l'outil d'usinage (1) et l'outil de maintien (2) de manière coordonnée, à partir de trajectoires d'usinage, de sorte à ce que le point d'usinage (P1) soit aligné avec le point de maintien (P2) selon la normale (N2) à la deuxième face (F2) audit point de maintien (P2),
- un module d'adaptation (6) configuré pour déterminer des trajectoires d'usinage réelles simples en escaliers TRAJr1 à partir, d'une part, de trajectoires d'usinage théoriques simples en escaliers TRAJt1 prédéterminées, et, d'autre part, d'une mesure de la surface réelle SURFr de la deuxième face (F2)
- **système caractérisé par le fait qu'**il comprend un module de gestion de pente (9) configuré pour déterminer des trajectoires d'usinage réelles en pente TRAJr2 à partir de trajectoires d'usinage théoriques en pente prédéterminées TRAJt2, des trajectoires d'usinage théoriques simples en escaliers prédéterminées TRAJt1 et des trajectoires d'usinage réelles simples TRAJr1, tel que les trajectoires d'usinage réelles en pente TRAJr2 sont configurées pour modifier l'orientation de l'outil d'usinage (1) qui est alors désaligné de l'outil de maintien (2) tout en restant en opposition et que l'orientation de l'outil d'usinage (1) varie au cours d'une étape de commande afin de former des pentes obliques de formes adaptées
- **par le fait que** le module de gestion de pente (9) comporte :
- un sous-module de détermination (91) d'une fonction d'adaptation élémentaire (Fe) à partir des trajectoires d'usinage théoriques simples prédéterminées en escaliers TRAJt1 et des trajectoires d'usinage réelles simples TRAJr1 ;
- un sous-module de transformation (92) de trajectoires d'usinage théoriques en pente prédéterminées TRAJt2 par la fonction d'adaptation élémentaire (Fe) afin d'obtenir les trajectoires d'usinage réelles en pente TRAJr2.

2. Système d'usinage mécanique automatisé (S) selon la revendication 1 dans lequel le module de gestion de pente (9) est configuré pour déterminer des trajectoires d'usinage réelles en pente TRAJr2 uniquement à partir de trajectoires d'usinage théoriques en pente prédéterminées TRAJt2, des trajectoires d'usinage théoriques simples en escaliers prédéterminées TRAJt1 et des trajectoires d'usinage réelles simples TRAJr1.

3. Système d'usinage mécanique automatisé (S) selon la revendication 1 dans lequel le sous-module de détermination (91) est configuré pour déterminer la primitive (Fe⁻¹) de la fonction d'adaptation élémentaire (Fe) à partir des trajectoires d'usinage théoriques simples prédéterminées en escaliers TRAJt1 et des trajectoires d'usinage réelles simples TRAJr1.

4. Système d'usinage mécanique automatisé (S) selon l'une des revendications 1 à 3 dans lequel le module de commande (5) est configuré pour orienter l'outil de maintien (2) selon la normale (N2) à la deuxième face (F2) audit point de maintien (P2) et configuré pour orienter l'outil d'usinage (1) selon un axe d'usinage (U) qui est écarté de la normale (N2) à la deuxième face (F2) d'un angle d'inclinaison (α) qui est supérieur à 3°.

5. Système d'usinage mécanique automatisé (S) selon la revendication 4 dans lequel le module de commande (5) est configuré pour orienter l'outil d'usinage (1) selon un axe d'usinage (U) qui est écarté de la normale (N2) à la deuxième face (F2) d'un angle d'inclinaison (α) qui est supérieur à 5°.

6. Procédé d'usinage d'un panneau métallique (P) par un système d'usinage mécanique automatisé (S) selon l'une des revendications 1 à 5, procédé comprenant :
- une étape de mesure de la surface réelle SURFr de la deuxième face (F2)
- une étape de détermination de trajectoires d'usinage réelles simples TRAJr1 à partir, d'une part, de trajectoires d'usinage théoriques simples prédéterminées en escaliers TRAJt1, et, d'autre part, de la mesure de la surface réelle SURFr de la deuxième face (F2)
- une étape de détermination de trajectoires d'usinage réelles en pente TRAJr2 à partir de trajectoires d'usinage théoriques en pente prédéterminées TRAJt2, des trajectoires d'usinage théoriques simples prédéterminées en escaliers TRAJt1 et des trajectoires d'usinage réelles simples TRAJr1
- une étape de commande de l'outil d'usinage (1) et de l'outil de maintien (2) de manière coordonnée, à partir de trajectoires d'usinage réelles en pente TRAJr2, le point d'usinage (P1) étant aligné avec le point de maintien (P2) selon la normale (N2) à la deuxième face (F2) audit point de maintien (P2), les trajectoires d'usinage réelles en pente TRAJr2 modifiant l'orientation de l'outil d'usinage (1) qui est alors désaligné de l'outil de maintien (2) tout en restant en opposition, l'orientation de l'outil d'usinage (1) variant au cours de l'étape de commande afin de former des pentes obliques de formes adaptées.

7. Procédé d'usinage d'un panneau métallique (P) selon la revendication 6 dans lequel, au cours de l'étape de commande de l'outil d'usinage (1) et l'outil de maintien (2) de manière coordonnée, l'outil de maintien (2) est orienté selon la normale (N2) à la deuxième face (F2) audit point de maintien (P2) et l'outil d'usinage (1) est orienté selon un axe d'usinage (U) qui est écarté de la normale (N2) à la deuxième face (F2) d'un angle d'inclinaison (α) qui est supérieur à 3°.

## Patentansprüche

1. System zur automatisierten mechanischen Bearbeitung (S) eines Metallblechs (P) mit einer ersten Seite (F1) und einer zweiten Seite (F2), die der ersten Seite (F1) gegenüberliegt, wobei das System zur automatisierten mechanischen Bearbeitung (S) umfasst:
- mindestens ein Bearbeitungswerkzeug (1), das ausgelegt ist, um an einem Bearbeitungspunkt (P1) mit der ersten Seite (F1) des Blechs (P) in Kontakt zu kommen,
- mindestens ein Haltewerkzeug (2), das ausgelegt ist, um an einem Haltepunkt (P2) mit der zweiten Seite (F2) des Blechs (P) in Kontakt zu kommen,
- ein Steuermodul (5), das ausgelegt ist, um das Bearbeitungswerkzeug (1) und das Haltewerkzeug (2) anhand von Bearbeitungsbahnen derart koordiniert zu steuern, dass der Bearbeitungspunkt (P1) mit dem Haltepunkt (P2) gemäß der Normalen (N2) auf der zweiten Seite (F2) an diesem Haltepunkt (P2) fluchtet,
- ein Anpassungsmodul (6), das ausgelegt ist, um stufenartige einfache tatsächliche Bearbeitungsbahnen TRAJr1 aus einerseits vorgegebenen stufenartigen einfachen theoretischen Bearbeitungsbahnen TRAJt1 und andererseits einer Messung der tatsächlichen Oberfläche SURFr der zweiten Seite (F2) zu bestimmen,
- wobei das System **dadurch gekennzeichnet ist, dass** es ein Neigungssteuerungsmodul (9) umfasst, das ausgelegt ist, um geneigte tatsächliche Bearbeitungsbahnen TRAJr2 aus vorgegebenen geneigten theoretischen Bearbeitungsbahnen TRAJt2, vorgegebenen stufenartigen einfachen theoretischen Bearbeitungsbahnen TRAJt1 und einfachen tatsächlichen Bearbeitungsbahnen TRAJr1 derart zu bestimmen, dass die geneigten tatsächlichen Bearbeitungsbahnen TRAJr2 ausgelegt sind, um die Ausrichtung des Bearbeitungswerkzeugs (1) zu ändern, das dann nicht mehr mit dem Haltewerkzeug (2) fluchtet, wobei es gegenüber diesem verbleibt und die Ausrichtung des Bearbeitungswerkzeugs (1) während eines Steuerungsschritts variiert, um geneigte Neigungen geeigneter Formen zu bilden
- dadurch, dass das Neigungssteuerungsmodul (9) aufweist:
- ein Submodul zur Bestimmung (91) einer elementaren Anpassungsfunktion (Fe) anhand der stufenartigen vorgegebenen einfachen theoretischen Bearbeitungsbahnen TRAJt1 und der einfachen tatsächlichen Bearbeitungsbahnen TRAJr1;
- ein Submodul (92) zur Umwandlung vorgegebener geneigter theoretischer Bearbeitungsbahnen TRAJt2 durch die elementare Anpassungsfunktion (Fe), um die geneigten tatsächlichen Bearbeitungsbahnen TRAJr2 zu erhalten.

2. System zur automatisierten mechanischen Bearbeitung (S) nach Anspruch 1, wobei das Neigungssteuerungsmodul (9) ausgelegt ist, um geneigte tatsächliche Bearbeitungsbahnen TRAJr2 ausschließlich aus vorgegebenen geneigten theoretischen Bearbeitungsbahnen TRAJt2, vorgegebenen stufenartigen einfachen theoretischen Bearbeitungsbahnen TRAJt1 einfachen tatsächlichen Bearbeitungsbahnen TRAJr1 zu bestimmen.

3. System zur automatisierten mechanischen Bearbeitung (S) nach Anspruch 1, wobei das Bestimmungs-Submodul (91) ausgelegt ist, die Primitive (Fe⁻¹) der elementaren Anpassungsfunktion (Fe) aus den stufenartigen vorgegebenen einfachen theoretischen Bearbeitungsbahnen TRAJt1 und den einfachen tatsächlichen Bearbeitungsbahnen TRAJr1 zu bestimmen.

4. System zur automatisierten mechanischen Bearbeitung (S) nach einem der Ansprüche 1 bis 3, wobei das Steuermodul (5) ausgelegt ist, um das Haltewerkzeug (2) gemäß der Normalen (N2) auf der zweiten Seite (F2) am Haltepunkt (P2) auszurichten, und ausgelegt ist, um das Bearbeitungswerkzeug (1) gemäß eine Bearbeitungsachse (U) auszurichten, die von der Normalen (N2) auf der zweiten Seite (F2) in einem Neigungswinkel (α) versetzt ist, der größer als 3° ist.

5. System zur automatisierten mechanischen Bearbeitung (S) nach Anspruch 4, wobei das Steuermodul (5) ausgelegt ist, um das Bearbeitungswerkzeug (1) gemäß einer Bearbeitungsachse (U) auszurichten, die von der Normalen (N2) auf der zweiten Seite (F2) in einem Neigungswinkel (α) versetzt ist, der größer als 5° ist.

6. Verfahren zum Bearbeiten einer Metallblechs (P) durch ein System zur automatisierten mechanischen Bearbeitung (S) nach einem der Ansprüche 1 bis 5, wobei das Verfahren umfasst:
- einen Messschritt der tatsächlichen Oberfläche SURFr der zweiten Seite (F2)
- einen Schritt der Bestimmung einfacher tatsächlicher Bearbeitungsbahnen TRAJr1 aus einerseits stufenartigen vorgegebenen einfachen theoretischen Bearbeitungsbahnen TRAJt1 und andererseits der Messung der tatsächlichen Oberfläche SURFr der zweiten Seite (F2)
- einen Schritt der Bestimmung geneigter tatsächlicher Bearbeitungsbahnen TRAJr2 aus vorgegebenen geneigten theoretischen Bearbeitungsbahnen TRAJt2, den stufenartigen vorgegebenen einfachen theoretischen Bearbeitungsbahnen TRAJt1 und den einfachen tatsächlichen Bearbeitungsbahnen TRAJr1
- einen Schritt der koordinierten Steuerung des Bearbeitungswerkzeugs (1) und des Haltewerkzeugs (2) auf der Basis geneigter tatsächlicher Bearbeitungsbahnen TRAJr2, wobei der Bearbeitungspunkt (P1) mit dem Haltepunkt (P2) gemäß der Normalen (N2) auf der zweiten Seite (F2) am Haltepunkt (P2) fluchtet, wobei die geneigten tatsächlichen Bearbeitungsbahnen TRAJr2 die Ausrichtung des Bearbeitungswerkzeugs (1) ändern, das dann nicht mehr mit dem Haltewerkzeug (2) fluchtet, wobei es gegenüber verbleibt, wobei die Ausrichtung des Bearbeitungswerkzeugs (1) während eines Steuerschritts variiert, um schräge Neigungen geeigneter Formen zu bilden.

7. Verfahren zum Bearbeiten eines Metallblechs (P) nach Anspruch 6, wobei während des Schritts des koordinierten Steuerns des Bearbeitungswerkzeugs (1) und des Haltewerkzeugs (2) das Haltewerkzeug (2) gemäß der Normalen (N2) auf der zweiten Seite (F2) am Haltepunkt (P2) ausgerichtet ist und das Bearbeitungswerkzeug (1) gemäß einer Bearbeitungsachse (U) ausgerichtet ist, die von der Normalen (N2) auf der zweiten Seite (F2) in einem Neigungswinkel (α) versetzt ist, der größer als 3° ist.

## Claims

1. An automated mechanical machining system (S) for machining a metal panel (P) comprising a first face (F1) and a second face (F2), which is opposite to the first face (F1), the automated mechanical machining system (S) comprising:
- at least one machining tool (1) configured to contact the first face (F1) of the panel (P) at a machining point (P1),
- at least one holding tool (2) configured to contact the second face (F2) of the panel (P) at a holding point (P2),
- a control module (5) configured to control the machining tool (1) and the holding tool (2) in a coordinated manner, on the basis of machining trajectories, so that the machining point (P1) is aligned with the holding point (P2) along the normal (N2) to the second face (F2) at said holding point (P2),
- an adaptation module (6) configured to determine simple actual machining trajectories stairs TRAJr1 from, on the one hand, predetermined simple theoretical machining trajectories stairs TRAJt1 and, on the other hand, a measurement of the actual surface area SURFr of the second face (F2),
- the system being **characterized in that** it comprises a slope management module (9) configured to determine actual sloping machining trajectories TRAJr2 from predetermined theoretical sloping machining trajectories TRAJt2, predetermined simple theoretical machining trajectories stairs TRAJt1 and simple actual machining trajectories TRAJr1, such that the actual sloping machining trajectories TRAJr2 are configured to change the orientation of the machining tool (1) which is then unaligned from the holding tool (2) while remaining in opposition and that the orientation of the machining tool (1) varies during a control step to form oblique slopes of suitable shapes
- and **in that** the slope management module (9) comprises:
- a sub-module for determining (91) an elementary adaptation function (Fe) from the predetermined simple theoretical machining trajectories TRAJt1 and the simple actual machining trajectories TRAJr1;
- a sub-module for transforming (92) predetermined theoretical sloping machining trajectories TRAJt2 by the elementary adaptation function (Fe) in order to obtain the actual sloping machining trajectories TRAJr2.

2. The automated mechanical machining system (S) according to claim 1, wherein the slope management module (9) is configured to determine actual sloping machining trajectories TRAJr2 only from predetermined theoretical sloping machining trajectories TRAJt2, predetermined simple theoretical machining trajectories stairs TRAJt1 and simple actual machining trajectories TRAJr1

3. The automated mechanical machining system (S) according to claim 1, wherein the determination sub-module (91) is configured to determine the primitive (Fe⁻¹) of the elementary adaptation function (Fe) from the predetermined simple theoretical machining trajectories stairsTRAJt1 and the simple actual machining trajectories TRAJr1.

4. The automated mechanical machining system (S) according to one of claims 1 to 3, wherein the control module (5) is configured to orient the holding tool (2) along the normal (N2) to the second face (F2) at said holding point (P2), and configured to orient the machining tool (1) along a machining axis (U) which is spaced apart from the normal (N2) to the second face (F2) by a tilt angle (α) which is greater than 3°.

5. The automated mechanical machining system (S) according to claim 4, wherein the control module (5) is configured to orient the machining tool (1) along a machining axis (U) which is spaced apart from the normal (N2) to the second face (F2) by a tilt angle (α) which is greater than 5°.

6. A method for machining a metal panel (P) by an automated mechanical machining system (S) according to one of claims 1 to 5, the method comprising:
a step of measuring the actual surface area SURFr of the second face (F2)
a step of determining simple actual machining trajectories TRAJr1 from, on the one hand, predetermined simple theoretical machining trajectories stairsTRAJt1 and, on the other hand, the measurement of the actual surface area SURFr of the second face (F2)
a step of determining actual sloping machining trajectories TRAJr2 from predetermined theoretical sloping machining trajectories TRAJt2, predetermined simple theoretical machining trajectories stairs TRAJt1 and simple actual machining trajectories TRAJr1
a step of controlling the machining tool (1) and the holding tool (2) in a coordinated manner, from actual sloping machining trajectories TRAJr2, the machining point (P1) being aligned with the holding point (P2) along the normal (N2) to the second face (F2) at said holding point (P2), the actual sloping machining trajectories TRAJr2 modifying the orientation of the machining tool (1) which is then unaligned from the holding tool (2) while remaining in opposition, the orientation of the machining tool (1) varying during the control step to form oblique slopes of suitable shapes.

7. The method for machining a metal panel (P) according to claim 6, wherein, during the step of controlling the machining tool (1) and the holding tool (2) in a coordinated manner, the holding tool (2) is oriented along the normal (N2) to the second face (F2) at said holding point (P2) and the machining tool (1) is oriented along a machining axis (U) which is spaced apart from the normal (N2) to the second face (F2) by a tilt angle (α) which is greater than 3°.
